# EUROPEAN PATENT SPECIFICATION

(11) **EP 4 246 705 B1**
(45) Date of publication and mention of the grant of the patent: **16.09.2026**
(21) Application number: 22890214.4
(22) Date of filing: 14.10.2022
(51) Int. Cl.: H01M 10/44, H01M 50/572, H01M 10/48, H01M 50/531, H02J 7/00, H01M 10/42, H01M 50/533, H01M 50/548, H01M 50/557, H01M 50/569, H01M 50/581, H01M 50/583, H02J 7/90, H02J 7/61

(54) **SECONDARY BATTERY CAPABLE OF PREVENTING OVERCHARGE, AND CHARGING METHOD THEREOF**
SEKUNDÄRBATTERIE ZUR VERHINDERUNG VON ÜBERLADUNG UND LADEVERFAHREN DAFÜR
BATTERIE SECONDAIRE POUVANT EMPÊCHER UNE SURCHARGE, ET SON PROCÉDÉ DE CHARGE

(30) Priority: 02.11.2021 KR 20210149067
(43) Date of publication of application: 20.09.2023
(73) Proprietor: LG Energy Solution, Ltd., Seoul 07335 (KR)
(72) Inventor: PARK, Jun Soo, Daejeon 34122 (KR)
(74) Representative: Plasseraud IP
(86) International application number: PCT/KR2022/015597
(87) International publication number: WO 2023/080479

(56) References cited:
- EP-A1- 3 817 085
- DE-A1- 102012 017 190
- JP-A- 2003 234 055
- JP-A- 2004 031 270
- JP-B2- 5 732 226
- KR-A- 20070 056 835
- KR-A- 20100 120 089
- US-A1- 2016 218 533
- US-A1- 2021 066 016

## Description

### [Technical Field]

The present invention relates to a secondary battery capable of preventing overcharge and its charging method.

This application claims the priority benefit based on Korean Patent Application No. 10-2021-0149067, filed on November 2, 2021.

### [Background of the Invention]

The demand for a secondary battery as an energy source has been rapidly increasing as the technology development and demand for mobile devices increase, and among those secondary batteries, lithium secondary batteries which have high energy density and high discharge voltage are being widely used.

However, because various combustible materials are embedded in such lithium secondary batteries, it has a drawback in safety by having a risk such as heat generation and explosion due to overcharging, overcurrent, and physical external shocks. That is, when a lithium battery is exposed to high temperature or if a large amount of current flows in the lithium battery in a short time due to overcharging, external short circuit, nail penetration, local crush, etc., there can be a risk of ignition/explosion by having the battery heated up with IR heating.

Specifically, if the temperature of the battery increases, the reaction between electrolyte and an electrode gets accelerated. As a result, heat of reaction is generated which causes the temperature of the battery to be additionally increased, and this in turn accelerates the reaction between the electrolyte and the electrode. This vicious cycle causes thermal runaway, which is a phenomenon where the temperature of a battery drastically increases, and the battery may be ignited if the temperature exceeds a certain limit. In addition, the reaction between the electrolyte and the electrode yields gas that causes internal pressure of the battery to increase, and the lithium secondary battery explodes when pressure exceeds a certain limit. Such ignition/explosion risk may be the most fatal flaw of a lithium secondary battery.

Therefore, the part to be necessarily considered in a lithium secondary battery development is safety assurance. In an effort to assure safety, a safety material can be placed outside of a cell, or a material inside the cell can be used. The former includes PTC materials and CID materials that make use of temperature difference, a protection circuit that makes use of voltage difference, and a safety vent that makes use of battery internal pressure difference, while the latter includes addition of materials that may change physically, chemically, or electrochemically according to the change in the battery internal temperature or voltage.

However, the technologies known to this point each have their own problems. For example, conventional safety materials placed outside of the cell cannot provide safety when internal part of the cell is already filled up with inflammable gas due to the occurrence of issue in the battery, and CID materials can only be applied to cylindrical batteries. In addition, it is known to not serve a protective role in the case where it needs a fast response time such as external short circuit, nail penetration, local crush etc.

In addition, as one of the methods of utilizing the material inside the cell, there may be a method of adding an electrolyte or an additive that improves the safety of the electrode. While chemical safety device has an advantage of not needing additional process or space and that it can be applied to all types of batteries, it can create an issue of degradation in performance when it is added. Such materials that have been reported include a material that forms a passivity layer in the electrode and a material that increases the resistance of the electrode when the volume is expanded due to increase in temperature. However, each of them may have a problem of either reducing the battery performance by having by-products produced during the formation of passivity layer, or reducing the battery capacity by taking up too much volume inside the battery, so it is not being used as a separate measure, for not assuring complete safety.

Examples and embodiments of prior art may be found in US 2016/218533 A1 and EP 3 817 085 A1.

### [Patent Document]

Japanese Patent Publication No. 2016-200539

### [Description of the Invention]

### [Technical Problem]

The present invention is directed to providing a secondary battery where safety issue due to overcharging is solved by detecting overcharging of the secondary battery, and halting the charging current being supplied to the secondary battery, as well as charging method thereof.

### [Technical Solution]

In order to achieve the above objective,

An exemplary embodiment of the present invention provides a secondary battery comprising:
an electrode assembly having a positive electrode lead and a negative electrode lead on opposite ends;
a conducting wire comprising a middle portion having one end electrically connected to the positive electrode lead, and a temperature-sensitive element electrically connected to the other end of the middle portion;
wherein the temperature-sensitive element is configured to be thermally deformed and electrically connected to the negative electrode lead when the temperature of the temperature-sensitive element is equal to a predetermined temperature or higher, thereby connecting the positive electrode and the negative electrode, and is configured not to be electrically connected to the negative electrode lead otherwise;
a voltage meter being electrically connected to the middle portion of the conducting wire, so that it measures continuously a voltage between the positive electrode lead and the negative electrode lead while the secondary battery is charged, once the temperature-sensitive element is connected to the negative electrode lead; and
a control unit electrically connected to the voltage meter and configured to receive voltage values measured by the voltage meter, wherein the control unit is configured to halt the charging of the secondary battery if the voltage value received from the voltage meter is greater than or equal to a predetermined value.

Here, the temperature-sensitive element may electrically connect the positive electrode lead and the negative electrode lead by changes in shape when it is exposed to temperature between 70°C and 100°C.

In addition, the temperature-sensitive element may contain a shape memory alloy comprising a Nickel-Titanium alloy.
In addition, the temperature-sensitive element may contain a bimetal comprising a first metal consisting of a Nickel-Iron alloy; and a second metal consisting of a Nickel-Manganese-Iron alloy, a Nickel-Molybdenum-Iron alloy, or a Nickel-Manganese-Copper.

In addition, an exemplary embodiment of the present invention provides a charging method of a secondary battery that includes:
charging a secondary battery of claim according to the present invention by supplying with electric power;
measuring a voltage by the voltage meter continuously;
halting the charging of the secondary battery if the voltage value received from the voltage meter is greater than or equal to a predetermined value.

Here, the temperature-sensitive element may electrically connect the positive electrode lead and the negative electrode lead by changes in shape when it is exposed to temperature between 70°C and 100°C.

For this purpose, the temperature-sensitive element may contain a shape memory alloy comprising a Nickel-Titanium alloy.
In addition, the temperature-sensitive element may contain a bimetal comprising a first metal consisting of a Nickel-iron alloy; and a second metal consisting of a Nickel-Manganese-Iron alloy, a Nickel-Molybdenum-Iron alloy, or a Nickel-Manganese-Copper.

### [Advantageous Effects]

The secondary battery according to the present invention has a conducting wire that electrically connects a positive electrode lead and a negative electrode lead, introducing a temperature-sensitive element that changes in shape under high-temperature conditions to the negative electrode lead end side of the conducting wire, and having a formation where voltage between the positive electrode lead and the negative electrode lead is measured. Thereby, the charging process can be immediately halted when overcharging of the secondary battery occurs, thus providing an advantage of better improving safety of the battery.

### [Brief Description of the Drawings]

FIG. 1 is a top view schematically showing the component of a secondary battery according to First Embodiment of the present invention.
FIG. 2 is a front view schematically showing the secondary battery of FIG. 1.
FIG. 3 is a front view showing a state where a shape memory alloy, which is the temperature-sensitive element of FIG. 2, is transformed and connected to the negative electrode lead.
FIG. 4 is a front view schematically showing the component of secondary battery according to Second Embodiment of the present invention.
FIG. 5 is a front view showing a state where a bimetal, which is the temperature-sensitive element of FIG. 4, is transformed and connected to the negative electrode lead.

### [Detailed description of the embodiments]

The term in the present invention is only used to explain a specific example and is not intended to limit to the present invention. A singular expression includes a plural expression unless the context indicates otherwise. The terms "comprise," "include", and "have" used herein designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

Specific exemplary embodiments of the present disclosure are described with reference to the figures. Here, it must be noted that the same elements with reference to the figures are indicated with the same symbols as far as possible. In addition, detailed explanation of any notified functions or composition that may obfuscate the present disclosure will be omitted. For the same reason, some of the elements in the figures are exaggerated or omitted or schematically illustrated.

### Secondary Battery

According to an exemplary embodiment of the present invention, comprising: an electrode assembly that has a positive electrode lead and a negative electrode lead on opposite ends; a conducting wire where its terminal electrically connects to the positive electrode lead; and a voltage meter that is electrically connected to a middle portion of the conducting wire; and wherein the conducting wire contains a temperature-sensitive element being introduced into the other end opposite to the one end of the conducting wire electrically connecting to the positive electrode lead, and electrically connects the positive electrode lead and the negative electrode lead according to temperature conditions.

The secondary battery according to the present invention includes an electrode assembly that each has a positive electrode lead and a negative electrode lead, and the electrode assembly is composed of a battery case that has a positive electrode, a negative electrode, and a separation membrane that is disposed between the positive electrode and the negative electrode. The positive electrode and the negative electrode included in the electrode assembly are connected to the positive electrode lead and the negative electrode lead respectively, and this electrode assembly is put into a pouch. In this case, the positive electrode lead and the negative electrode lead of the electrode assembly may be disposed to protrude outward from the pouch, and may be sealed at an edge of the pouch by thermos compression.

Here, the type of the positive electrode lead and the negative electrode lead placed on both ends of the electrode assembly is illustrated in this specification, but the present invention can apply to a type where the positive electrode lead and the negative electrode lead are placed on one end of the electrode assembly.

The positive electrode lead of electrode assembly includes a conducting wire where one end is electrically connected. The conducting wire electrically connects to the positive electrode lead, and it can be connected by stripping the end of a wire and welding it to the upper surface of the positive electrode lead. The one end of the conducting wire can be bent in order to make it parallel to the upper surface of the positive electrode lead and increase the contacting length with the upper surface of the positive electrode lead.

In addition, the conducting wire can be placed without any limitations as long as the location does not produce any internal short circuit between the positive electrode lead and the negative electrode lead of the electrode assembly. Specifically, the conducting wire is located on the outer surface of the electrode assembly-inserted pouch, and may be electrically connected to the positive electrode lead and the negative electrode lead protruding outward from the pouch. Also, depending on the situation, the surface of the conducting wire is insulation coated so that it can electrically connect to the positive electrode lead and the negative electrode lead on the inside of the pouch where the electrode lead is inserted.

Moreover, the conducting wire includes a temperature-sensitive element that electrically connects to the negative electrode lead by changing its shape depending on the temperature condition from the other end to the end where the positive electrode lead is electrically connected. That is, the negative electrode lead of the secondary battery may be connected to connected to the conducting wire by changing in a shape of the temperature-sensitive element depending of the heat generated from the electrode assembly during overcharging of the secondary battery.

The temperature-sensitive element to electrically connect the positive electrode lead and the negative electrode lead, can cause shape change under a high temperature conditions, for example, when it is exposed to 70°C~100°C, and specifically 80°C~100°C or 75°C~95°C.

There is no special limitation to the type of such temperature-sensitive element as long as it can change its shape in temperature range between 70°C and 100°C, but it can specifically be composed a shape memory alloy comprising one or more selected from the group consisting of a Nickel-Titanium alloy and a Copper-Zinc-Aluminum alloy; or a bimetal comprising a first metal consisting of a Nickel-Iron alloy, and a second metal consisting of a Nickel-Manganese-Iron alloy, a Nickel-Molybdenum-Iron alloy, or a Nickel-Manganese-Copper.

According to an exemplary embodiment, the temperature-sensitive element may include a Nickel-Titanium alloy which has an excellent shape recovery capacity and a great processability.

According to another exemplary embodiment, the temperature-sensitive element may include a bimetal comprising a first metal composed of an alloy of Nickel-Iron; and a second metal composed of an alloy of Nickel-Manganese-Iron.

The voltage meter electrically connects to the middle portion of conducting wire. That is, the voltage meter can have a wire connection terminal on both ends. The voltage meter may be positioned to be spaced apart from the electrode assembly instead of being positioned above the electrode assembly if the conducting wire has one end connect to the positive electrode lead, and the other end connect to the negative electrode lead though the temperature-sensitive element that disposed to contact the upper surface of the electrode assembly.

A secondary battery charging device is generally provided with a voltage meter for measuring the voltage between the positive electrode and the negative electrode of the electrode assembly. Therefore, the secondary battery of the present invention can be configured by connecting a middle portion of the conductive wire that is connecting to respectively the positive electrode lead and the temperature-sensitive element, to the previously provided voltage meter.

Moreover, the voltage meter continues to measure the voltage during charging, and the measured voltage value becomes zero before the temperature-sensitive element connects to the negative electrode lead. That is, the voltage meter is continuously driven while the secondary battery is being charged, however heat is generated due to overcharging of the secondary battery, and thus the shape of the temperature-sensitive element is deformed so that the voltage between the positive electrode lead and the negative electrode lead cannot be measured until the temperature-sensitive element is connected to the negative electrode lead, so a voltage value of zero may be obtained as a result value. In addition, when the shape of the temperature-sensitive element is deformed under a high temperature condition and gets connected to the negative electrode lead, the voltage meter electrically connected to the middle portion of the conducting wire can measure the voltage between the positive electrode lead and the negative electrode lead.

In addition, the voltage meter may be electrically connected to the control unit and may transmit a measured voltage value to the control unit. The control unit may stop the charging of the secondary battery when a voltage higher than a predetermined value is measured by the voltage meter.

Specifically, when charging by connecting power to the positive electrode lead and the negative electrode lead of the electrode assembly, heat is generated in the electrode assembly. Since the temperature-sensitive element is in contact with the upper surface of the electrode assembly, heat may be received by conduction. When the temperature of the temperature-sensitive element increases by receiving heat, the end part of the negative electrode lead gets thermally deformed and can be connected to the negative electrode lead at a predetermined temperature or higher. When the temperature-sensitive element is connected to the negative electrode lead, the voltage charged in the electrode assembly until then gets measured. The control unit may stop the charging of the secondary battery when a voltage of a predetermined value slightly greater than zero is measured by the voltage meter. Accordingly, this can prevent swelling or ignition of the secondary battery due to overcharging.

Here, the predetermined value means a preset value 4.0V or more, and specifically it can be 4.1V or more, 4.2V or more, 4.2 to 4.8V; or 4.2 to 4.5V.

Meanwhile, the secondary battery includes a lead-acid battery, a Nickel-Cadmium (NiCd) battery, a Nickel-metal hydrogen (Ni-MH) battery, a lithium-ion (Li-ion) battery, and a lithium-ion (Li-ion) polymer battery. According to an exemplary embodiment, the secondary battery may be a Li-ion battery. The Li-ion battery is light, has a large capacity, rarely has self-discharge, and accounts for most of the secondary battery market by having a high voltage. However, because the Li-ion battery has a possibility of explosion or ignition when it gets overcharged, there is a need for overcharge protection according to the present invention.

### Secondary Battery Charging Method

In addition, an exemplary embodiment of the present invention provides a charging method of a secondary battery that includes:
charging a secondary battery of according to the present invention by supplying with electric power;
measuring a voltage by the voltage meter when a temperature-sensitive element of a conducting wire provided in the secondary battery electrically connects to the negative electrode lead;
halting the charging of the secondary battery if the voltage value received from the voltage meter is greater than or equal to a predetermined value.

The secondary battery charging method according to the present invention is a method of charging the secondary battery of the present invention described above, wherein the charging is performed by supplying electric power to the secondary battery of the present invention, and the voltage meter measures the voltage when the temperature-sensitive element of the conducting wire provided in the secondary battery electrically connects to the negative electrode lead by being deformed by heat generated from the electrode assembly during overcharging.

In order for the temperature-sensitive element to electrically connect the positive electrode lead and the negative electrode lead, the temperature conditions, for example, can cause shape change when it is exposed to 70°C~100°C, and specifically 80°C~100°C or 75°C~95°C.

There is no special limitation to the type of such temperature-sensitive element as long as it can change its shape in temperature range between 70°C and 100°C, but it can specifically be composed of a shape memory alloy that includes one or more kind of an alloy of a Nickel-Titanium alloy and a Copper-Zinc-Aluminium alloy; or the temperature-sensitive element may be composed of a bimetal comprising consisting of a Nickel-Iron alloy, and a second metal consisting of a Nickel-Manganese-Iron alloy, Nickel-Molybdenum-Iron alloy, Nickel-Manganese-Copper.

According to an exemplary embodiment, the temperature-sensitive element may include a Nickel-Titanium alloy which has an excellent shape recovery capacity and a great processability.

According to another exemplary embodiment, the temperature-sensitive element may include a bimetal comprising a first metal composed of an alloy of Nickel-Iron and a second metal composed of an alloy of Nickel-Manganese-Iron.

In addition, the voltage meter may send the measured voltage value to the control unit through a voltage signal, and the control unit may halt the secondary battery charging process if the received voltage value is above the predetermined value.

Here, the predetermined value means a preset value 4.0V or more, and specifically it can be 4.1V or more, 4.2V or more, 4.2 to 4.8V; or 4.2 to 4.5V.

In addition, the secondary battery includes a lead-acid battery, a Nickel-Cadmium (NiCd) battery, a Nickel-metal hydrogen (Ni-MH) battery, a lithium-ion (Li-ion) battery, and a lithium-ion (Li-ion) polymer battery. According to an exemplary embodiment, the secondary battery may be a Li-ion battery. The Li-ion battery is light, has a large capacity, rarely has self-discharge, and accounts for most of the secondary battery market by having a high voltage. However, because the Li-ion battery has a possibility of explosion or ignition when it gets overcharged, there is a need for overcharge protection according to the present invention.

### [Detailed Description of the Embodiments]

The following description explains the secondary battery according to the present invention, and the various forms of charging methods of the secondary battery by referring to the figures.

### (First Embodiment)

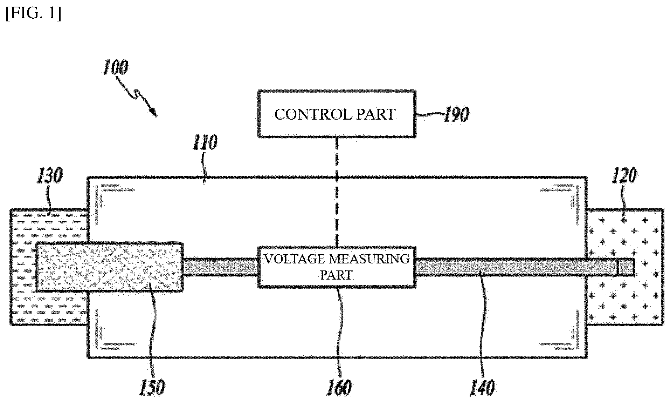

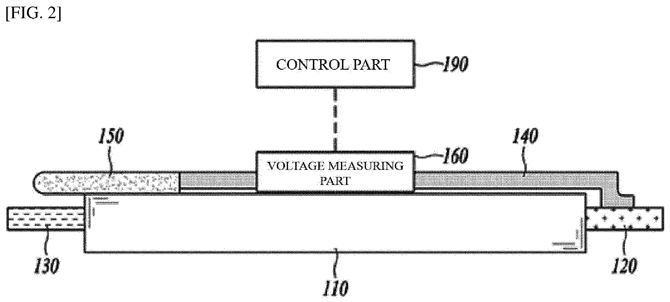

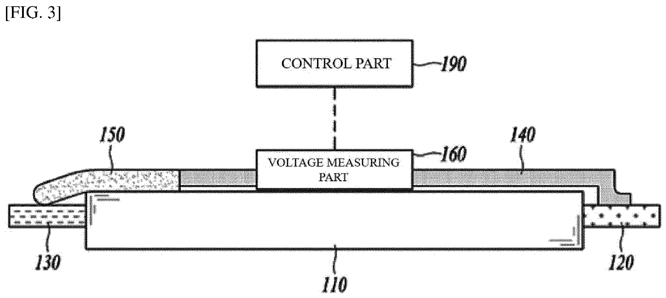

FIG. 1 is a top view schematically showing the composition of the secondary battery according to First Embodiment of the present invention, FIG. 2 is a front view schematically showing the secondary battery of FIG. 1, and FIG. 3 is a front view showing a state where a shape memory alloy, which is the temperature-sensitive element of FIG. 2, is transformed and connected to the negative electrode lead.

The secondary battery 100 according to First Embodiment of the present invention includes an electrode assembly 110 that has a positive electrode lead 120 and a negative electrode lead 130 on both ends, a conducting wire 140 where one end electrically connects to the positive electrode lead, a temperature-sensitive element 150 including a shape memory alloy that electrically connects to the other end of the conducting wire that is opposed to the end electrically connected to the positive electrode lead and at least a part of it contacts with the electrode assembly 110, a voltage meter 160 that electrically connects to the middle portion of the conducting wire, and a control unit 190 that halts the electrode assembly 110 from charging by measuring voltage value greater than the predetermined value when the temperature-sensitive element 150 that includes the shape memory alloy changes the shape and connects to the negative electrode lead 130.

Here, the positive electrode lead 120 and the negative electrode lead 130 are located on both ends of the electrode assembly 110, and the conducting wire 140 electrically connects to the positive electrode lead 120, and it can be connected by stripping the end of the conductive wire and welding it to the upper surface of the positive electrode lead 120. The one end of the conducting wire 140 can be bent in order to make it parallel to the upper surface of the positive electrode lead 120 so that increase the contacting length with the upper surface of the positive electrode lead 120.

The temperature-sensitive element 150 may be electrically connected to the other end of the conducting wire 140. The temperature-sensitive element 150 not only changes its shape based on the temperature, but it can also be made out of conductive metal in order to flows electricity by having other end of the conducting wire 140 connected. The temperature-sensitive element 150 is a part where its shape changes by the heat transferred from the electrode assembly 110, and most part of the temperature-sensitive element 150, with the exception of the part close to the negative electrode lead 130, can be placed to be connected to the upper surface of the electrode assembly 110.

The voltage meter 160 electrically connects to the middle portion of conducting wire 140. That is, the voltage meter 160 can have a wire connection terminal on both ends. Once the conducting wire 140 has one end connect to the positive electrode lead 120 and the other end connect to the temperature-sensitive element 150 that is placed to have the other end touch the upper surface of the electrode assembly 110, the voltage meter 160 may be positioned to be spaced apart from the electrode assembly 110 instead of being positioned above the electrode assembly 110.

The control unit 190 may halt the charging of the electrode assembly 110 if the voltage measured by the voltage meter 160 exceeds the predetermined voltage value. When charging occurs by having electrical power connected to the positive electrode lead 120 and the negative electrode lead 130 of the electrode assembly 110, heat is generated from the electrode assembly 110. The temperature-sensitive element 150 may receive heat through conduction because it is in contact with the upper surface of the electrode assembly 110. When the temperature-sensitive element 150 receives heat and rise in temperature, the temperature-sensitive element 150 at the end of the negative electrode lead 130 is transformed and can be connected to the negative electrode lead 130 above certain temperature.

In addition, the voltage meter 160 measures voltage nonstop during the charging process, and the measured voltage value is zero before the temperature-sensitive element 150 including a shape memory alloy connects to the negative electrode lead 130. Once the temperature-sensitive element 150 connects to the negative electrode lead 130, the voltage of the electrode assembly 110 charged up to that point is measured. The control unit 190 can halt the charging process of the electrode assembly 110 if the voltage measured by the voltage meter 160 is a predetermined value slightly greater than zero, for example, 4.2 to 4.5V or 4.2 to 4.3V Therefore, it can prevent the secondary battery from swelling, where battery gets inflated due to overcharging or igniting.

Meanwhile, the temperature-sensitive element 150 receives heat from the electrode assembly 110, is transformed in the temperature of 80 to 100°C, and may be connecting to the negative electrode lead 130. The temperature-sensitive element 150 does not connect to the negative electrode lead 130 even if its shape gets transformed in temperature between room temperature and 80°C, and once it gets to the 80 to 100°C range, the temperature-sensitive element 150 is transformed and connected to the negative electrode lead 130.

A shape memory alloy is an alloy with a property of returning to a state before transformation when it is heated up even after changing in shape. The temperature-sensitive element 150 has its original form shaped as illustrated in FIG. 3, and may be manufactured by pressing to a rectangular plate form in room temperature. When the temperature-sensitive element 150 gets heated up to 80 to 100°C, it gets transformed to a bent form, and can be connected to the negative electrode lead 130.

In addition, the temperature-sensitive element 150 can be made of Ni-Ti alloy. Typical examples of shape memory alloy are a Ni-Ti alloy and a Cu-Zn-Al alloy. While the Ni-Ti alloy has a disadvantage of being expensive, it is better than the Cu-Zn-Al alloy by having a great shape recovery capacity and processability.

The present specification describes the conducting wire 140 being connected to the positive electrode lead 120 and the temperature-sensitive element 150 being transformed and connected to the negative electrode lead 130, but the conducting wire 140 may be connected to the negative electrode lead 130 and the temperature-sensitive element 150 may be transformed and connected to the positive electrode lead 120.

The secondary battery according to First Embodiment of the present invention, overcharging can be prevented in advance when charging is halted if voltage is measured by the temperature-sensitive element and the voltage meter.

### (Second Embodiment)

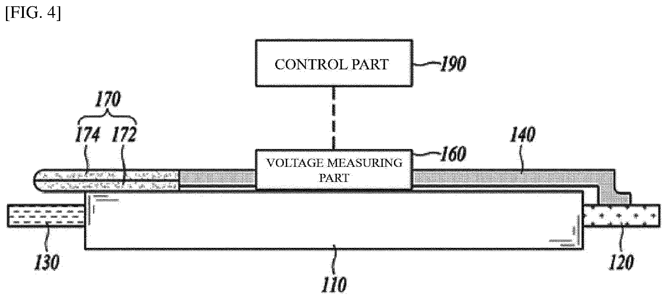

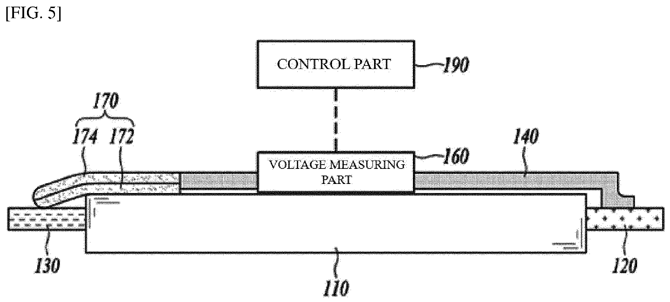

FIG. 4 is a front view schematically showing the composition of the secondary battery according to Second Embodiment of the present invention, and FIG. 5 is a front view showing a state where a bimetal, which is the temperature-sensitive element of FIG. 4, is transformed and connected to the negative electrode lead.

The secondary battery according to Second Embodiment of the present invention includes an electrode assembly 110 that has a positive electrode lead 120 and a negative electrode lead 130 on both ends, a conducting wire 140 where one end electrically connects to the positive electrode lead, a temperature-sensitive element 170 that electrically connects to the other end of the conducting wire that is opposed to the end electrically connected to the positive electrode lead and at least a part of it contacts with the electrode assembly 110, a voltage meter 160 that electrically connects to the middle portion of the conducting wire, and a control unit 190 that halts the electrode assembly 110 from charging by measuring voltage value greater than the predetermined value when the temperature-sensitive element 170 that includes a bimetal changes the shape and connected to the negative electrode lead 130.

The secondary battery according to Second Embodiment is different from the secondary battery according to First Embodiment in that the temperature-sensitive element 170 includes a bimetal instead of a shape memory alloy. Therefore, the following description mainly explains the temperature-sensitive element 170 that includes a bimetal.

The temperature-sensitive element 170 can be electrically connected to the other end of the conducting wire 140, which has its one end connected to the positive electrode lead 120. When the electrode assembly 110 is being charged, the temperature-sensitive element 170 may receive heat from the electrode assembly 110 so that transformed and connected to the negative electrode lead. The temperature-sensitive element 170 may be positioned so that at least a part of it is in contact with the electrode assembly 110 so as to be it can receive heat from the electrode assembly 110 due to conduction.

A bimetal is made by stacking two separate thin metal sheets and welding them together to make one band, and using the fact that each metal has its own coefficient of expansion, the metal bends to one side by having different length of expansion depending on the changing temperature.

The temperature-sensitive element 170 that includes such bimetal may connect to the negative electrode lead 130 by receiving heat from the electrode assembly 110 and getting transformed in the temperature of 80 to 100°C. Depending on the coefficient of expansion and form of the two sound metals, the temperature-sensitive element 170 can be manufactured to connect to the negative electrode lead 130 by being transformed at the temperature of 80 to 100°C. 80 to 100°C can be seen as temperature range that is right before overcharging occurs in secondary batteries, especially in Li-ion batteries.

According to an exemplary embodiment, the temperature-sensitive element 170 may include a first metal 172 composed of Nickel-Iron alloy, a second metal 174 composed of an alloy of Nickel-Manganese-Iron, an alloy of Nickel-Molybdenum-Iron, or an alloy of Nickel-Manganese-Copper. Here, the first metal 172 is a metal that has smaller coefficient of expansion compared to the second metal 174, and it can be formed as an alloy consisting of Nickel and Iron. In addition, the second metal 174 is a metal that has bigger coefficient of expansion compared to the first metal 172, and it can be composed of a Nickel-Manganese-Iron alloy, a Nickel-Molybdenum-Iron alloy, or a Nickel-Manganese-Copper alloy.

While the temperature-sensitive element 170 is illustrated as being placed on the upper surface of the electrode assembly 110 in FIG. 3 and FIG. 4, the temperature-sensitive element 170 including a bimetal can be placed on the under surface of the electrode assembly 110. Since the second metal 174 is a metal that has bigger coefficient of expansion compared to the first metal 172, it is more efficient for the second metal 174 to be in contact with the electrode assembly 110, and directly receive heat from it.

### (Third Embodiment)

Next will be an explanation of a method for controlling charging of the secondary battery according to the present invention by referring to the figures.

First, connect electrical power to the positive electrode lead 120 and the negative electrode lead 130 of the electrode assembly 110, and begin charging by supplying electricity.

Then, measure voltage using the voltage meter 160, which is connected to the middle portion of conducting wire where one end is connected to the positive electrode lead 120 and the other end is connected to the temperature-sensitive element 150 or 170.

Here, the temperature-sensitive element 150 or 170 may include a shape memory alloy of First Embodiment or a bimetal of Second Embodiment. The temperature-sensitive element 170 that includes a shape memory alloy can be connected to the negative electrode lead 130 as its shape gets transformed by the heat received from the electrode assembly having at least a part of it contact with the electrode assembly 110. The temperature-sensitive element 170 that includes a bimetal has at least its part in contact with the electrode assembly 110 and can be connected to the negative electrode lead 130 by transforming due to the heat received from the electrode assembly.

In addition, the voltage meter 160 can continuously measure voltage once charging is started and can send voltage signal to the control unit 190.

Lastly, by having the temperature-sensitive element 150 or 170 changes its shape and connects to the negative electrode lead 130, the electrode assembly 110 halts charging if the voltage value measured by the voltage meter 160 is greater than the predetermined value.

Specifically, during the charging of the electrode assembly 110, the temperature-sensitive element 150 or 170 receives heat from the electrode assembly 110 and gets transformed, and once it gets to the temperature of 80 to 100°C, it can be connected to the negative electrode lead 130. Accordingly, the voltage value measured at the voltage meter 160 increases from zero to a value greater than a predetermined value, and the control unit 190 can halt charging of electrode assembly 110 when this voltage signal is received.

### [Description of Symbols]

100: SECONDARY BATTERY
110: ELECTRODE ASSEMBLY
120: POSITIVE ELECTRODE LEAD
130: NEGATIVE ELECTRODE LEAD
140: CONDUCTING WIRE
150/170: TEMPERATURE-SENSITIVE ELEMENT
160: VOLTAGE METER
172: FIRST METAL
174: SECOND METAL
190: CONTROL UNIT

## Claims

1. A secondary battery (100) comprising:
an electrode assembly (110) having a positive electrode lead (120) and a negative electrode lead (130) on opposite ends;
a conducting wire (140) comprising a middle portion having one end electrically connected to the positive electrode lead (120), and a temperature-sensitive element (150, 170) electrically connected to the other end of the middle portion;
wherein the temperature-sensitive element (150, 170) is configured to be thermally deformed and electrically connected to the negative electrode lead (130) when the temperature of the temperature-sensitive element (150, 170) is equal to a predetermined temperature or higher, thereby connecting the positive electrode and the negative electrode, and is configured not to be electrically connected to the negative electrode (120) lead otherwise;
a voltage meter (160) being electrically connected to the middle portion of the conducting wire (140), so that it measures continuously a voltage between the positive electrode lead (120) and the negative electrode lead (130) while the secondary battery (100) is charged, once the temperature-sensitive element (150, 170) is connected to the negative electrode lead; and
a control unit (190) electrically connected to the voltage meter (160) and configured to receive voltage values measured by the voltage meter (160), wherein the control unit (190) is configured to halt the charging of the secondary battery (100) if the voltage value received from the voltage meter (160) is greater than or equal to a predetermined value.

2. The secondary battery of claim 1, wherein the temperature-sensitive element (150, 170) is configured to electrically connect the positive electrode lead (120) and the negative electrode lead (130) by changes in shape when it is exposed to temperature between 70°C and 100°C.

3. The secondary battery of claim 1, wherein the temperature-sensitive element (150, 170) contains a shape memory alloy comprising a nickel-titanium alloy.

4. The secondary battery of claim 1, wherein the temperature-sensitive element (150, 170) contains a bimetal comprising a first metal (172) consisting of a nickel-iron alloy; and a second metal (174) consisting of a nickel-manganese-iron alloy, a nickel-molybdenum-iron alloy, or a nickel-manganese-copper.

5. A charging method of a secondary battery comprising:
charging a secondary battery (100) according to claim 1 by supplying electric power to the secondary battery (100);
measuring a voltage by the voltage meter (160) continuously;
halting the charging of the secondary battery (100) if a voltage value received from the voltage meter (160) is greater than or equal to the predetermined value.

6. The charging method of the secondary battery of claim 5, wherein the temperature-sensitive element (150, 170) is configured to electrically connect the positive electrode lead (120) and the negative electrode lead (130) by changes in shape when it is exposed to temperature between 70°C and 100°C.

7. The charging method of the secondary battery of claim 5, wherein the temperature-sensitive element (150, 170) contains a shape memory alloy comprising a Nickel-Titanium alloy.

8. The charging method of the secondary battery of claim 5, wherein the temperature-sensitive element (150, 170) contains a bimetal comprising a first metal (172) consisting of a nickel-iron alloy; and a second metal (174) consisting of a nickel-manganese-iron alloy, a nickel-molybdenum-iron alloy, or a nickel-manganese-copper.

## Patentansprüche

1. Sekundärbatterie (100), umfassend:
eine Elektrodenanordnung (110) mit einer positiven Elektrodenableitung (120) und einer negativen Elektrodenableitung (130) an gegenüberliegenden Enden;
einen leitenden Draht (140), der einen Mittelabschnitt umfasst, dessen eines Ende elektrisch mit der positiven Elektrodenableitung (120) verbunden ist, und ein temperaturempfindliches Element (150, 170), das elektrisch mit dem anderen Ende des Mittelabschnitts verbunden ist;
wobei das temperaturempfindliche Element (150, 170) so konfiguriert ist, dass es thermisch verformt und elektrisch mit der negativen Elektrodenableitung (130) verbunden wird, wenn die Temperatur des temperaturempfindlichen Elements (150, 170) gleich einer vorbestimmten Temperatur oder höher als diese ist, wodurch die positive Elektrode und die negative Elektrode verbunden werden, und so konfiguriert ist, dass es andernfalls nicht elektrisch mit der negativen Elektrodenableitung (120) verbunden ist;
ein Spannungsmessgerät (160), das elektrisch mit dem Mittelabschnitt des leitenden Drahtes (140) verbunden ist, so dass es kontinuierlich eine Spannung zwischen der positiven Elektrodenableitung (120) und der negativen Elektrodenableitung (130) misst, während die Sekundärbatterie (100) geladen wird, sobald das temperaturempfindliche Element (150, 170) mit der negativen Elektrodenableitung verbunden ist; und
eine Steuereinheit (190), die elektrisch mit dem Spannungsmessgerät (160) verbunden und so konfiguriert ist, dass sie vom Spannungsmessgerät (160) gemessene Spannungswerte empfängt, wobei die Steuereinheit (190) so konfiguriert ist, dass sie das Laden der Sekundärbatterie (100) anhält, wenn der vom Spannungsmessgerät (160) empfangene Spannungswert größer als oder gleich einem vorbestimmten Wert ist.

2. Sekundärbatterie nach Anspruch 1, wobei das temperaturempfindliche Element (150, 170) so konfiguriert ist, dass es die positive Elektrodenableitung (120) und die negative Elektrodenableitung (130) durch Formänderungen elektrisch verbindet, wenn es einer Temperatur zwischen 70 °C und 100 °C ausgesetzt ist.

3. Sekundärbatterie nach Anspruch 1, wobei das temperaturempfindliche Element (150, 170) eine Formgedächtnislegierung enthält, die eine Nickel-Titan-Legierung umfasst.

4. Sekundärbatterie nach Anspruch 1, wobei das temperaturempfindliche Element (150, 170) ein Bimetall enthält, das ein erstes Metall (172), das aus einer Nickel-Eisen-Legierung besteht, und ein zweites Metall (174) umfasst, das aus einer Nickel-Mangan-Eisen-Legierung, einer Nickel-Molybdän-Eisen-Legierung oder einem Nickel-Mangan-Kupfer besteht.

5. Ladeverfahren für eine Sekundärbatterie, umfassend:
Laden einer Sekundärbatterie (100) nach Anspruch 1 durch Zuführen von elektrischer Energie zur Sekundärbatterie (100);
kontinuierliches Messen einer Spannung durch das Spannungsmessgerät (160);
Anhalten des Ladens der Sekundärbatterie (100), wenn ein vom Spannungsmessgerät (160) empfangener Spannungswert größer als oder gleich dem vorbestimmten Wert ist.

6. Ladeverfahren für die Sekundärbatterie nach Anspruch 5, wobei das temperaturempfindliche Element (150, 170) so konfiguriert ist, dass es die positive Elektrodenableitung (120) und die negative Elektrodenableitung (130) durch Formänderungen elektrisch verbindet, wenn es einer Temperatur zwischen 70 °C und 100 °C ausgesetzt ist.

7. Ladeverfahren für die Sekundärbatterie nach Anspruch 5, wobei das temperaturempfindliche Element (150, 170) eine Formgedächtnislegierung enthält, die eine Nickel-Titan-Legierung umfasst.

8. Ladeverfahren für die Sekundärbatterie nach Anspruch 5, wobei das temperaturempfindliche Element (150, 170) ein Bimetall enthält, das ein erstes Metall (172), das aus einer Nickel-Eisen-Legierung besteht, und ein zweites Metall (174) umfasst, das aus einer Nickel-Mangan-Eisen-Legierung, einer Nickel-Molybdän-Eisen-Legierung oder einem Nickel-Mangan-Kupfer besteht.

## Revendications

1. Batterie secondaire (100) comprenant :
un ensemble d'électrodes (110) ayant une sortie d'électrode positive (120) et une sortie d'électrode négative (130) sur des extrémités opposées ;
un fil conducteur (140) comprenant une partie médiane ayant une extrémité connectée électriquement à la sortie d'électrode positive (120), et un élément thermosensible (150, 170) connecté électriquement à l'autre extrémité de la partie médiane ;
dans laquelle l'élément thermosensible (150, 170) est configuré pour être déformé thermiquement et connecté électriquement à la sortie d'électrode négative (130) lorsque la température de l'élément thermosensible (150, 170) est égale ou supérieure à une température prédéterminée, connectant ainsi l'électrode positive et l'électrode négative, et est configuré pour ne pas être connecté électriquement à la sortie d'électrode négative (120) autrement ;
un voltmètre (160) étant connecté électriquement à la partie médiane du fil conducteur (140), de sorte qu'il mesure en continu une tension entre la sortie d'électrode positive (120) et la sortie d'électrode négative (130) pendant que la batterie secondaire (100) est chargée, une fois que l'élément thermosensible (150, 170) est connecté à la sortie d'électrode négative ; et
une unité de commande (190) connectée électriquement au voltmètre (160) et configurée pour recevoir des valeurs de tension mesurées par le voltmètre (160), dans laquelle l'unité de commande (190) est configurée pour arrêter la charge de la batterie secondaire (100) si la valeur de tension reçue du voltmètre (160) est supérieure ou égale à une valeur prédéterminée.

2. Batterie secondaire selon la revendication 1, dans laquelle l'élément thermosensible (150, 170) est configuré pour connecter électriquement la sortie d'électrode positive (120) et la sortie d'électrode négative (130) par des changements de forme lorsqu'il est exposé à une température comprise entre 70°C et 100°C.

3. Batterie secondaire selon la revendication 1, dans laquelle l'élément thermosensible (150, 170) contient un alliage à mémoire de forme comprenant un alliage de nickel-titane.

4. Batterie secondaire selon la revendication 1, dans laquelle l'élément thermosensible (150, 170) contient un bilame comprenant un premier métal (172) consistant en un alliage de nickel-fer ; et un second métal (174) consistant en un alliage de nickel-manganèse-fer, un alliage de nickel-molybdène-fer ou un nickel-manganèse-cuivre.

5. Procédé de charge d'une batterie secondaire comprenant :
la charge d'une batterie secondaire (100) selon la revendication 1 en fournissant de l'énergie électrique à la batterie secondaire (100) ;
la mesure en continu d'une tension par le voltmètre (160) ;
l'arrêt de la charge de la batterie secondaire (100) si une valeur de tension reçue du voltmètre (160) est supérieure ou égale à la valeur prédéterminée.

6. Procédé de charge de la batterie secondaire selon la revendication 5, dans lequel l'élément thermosensible (150, 170) est configuré pour connecter électriquement la sortie d'électrode positive (120) et la sortie d'électrode négative (130) par des changements de forme lorsqu'il est exposé à une température comprise entre 70°C et 100°C.

7. Procédé de charge de la batterie secondaire selon la revendication 5, dans lequel l'élément thermosensible (150, 170) contient un alliage à mémoire de forme comprenant un alliage de Nickel-Titane.

8. Procédé de charge de la batterie secondaire selon la revendication 5, dans lequel l'élément thermosensible (150, 170) contient un bilame comprenant un premier métal (172) consistant en un alliage de nickel-fer ; et un second métal (174) consistant en un alliage de nickel-manganèse-fer, un alliage de nickel-molybdène-fer ou un nickel-manganèse-cuivre.
